# FASCICULE DE BREVET EUROPEEN

(11) **EP 0 539 252 B1**
(45) Date de publication et mention de la délivrance du brevet: **16.09.1998**
(21) Numéro de dépôt: 92402671.9
(22) Date de dépôt: 29.09.1992
(51) Int. Cl.: H04B 1/66

(54) **Procédé de synchronisation de deux signaux**
Verfahren zur Synchronisierung von zwei Signalen
Method for synchronising two signals

(30) Priorité: 22.10.1991 FR 9113002
(43) Date de publication de la demande: 28.04.1993
(73) Titulaire: SCHLUMBERGER INDUSTRIES S.A., 92120 Montrouge (FR)
(72) Inventeur: Muller, Marc, F-92140 Clamart (FR); Sarquiz, Philippe, F-75012 Paris (FR)
(74) Mandataire: Dupont, Henri

(56) Documents cités:
- EP-A- 0 385 636
- EP-A- 0 428 444
- US-A- 5 029 181

## Description

La présente invention concerne un procédé permettant la synchronisation de deux signaux périodiques de même forme et de même période théorique, le premier signal étant produit de façon itérative, dans lequel le second signal est synthétisé de façon itérative avec une phase ajustable, et dans lequel cette phase est ajustée, jusqu'à l'obtention de la synchronisation, en fonction d'une mesure de corrélation entre les premier et second signaux.

Des procédés de ce type sont bien connus et utilisés dans le domaine de la transmission d'informations numériques par radio, dans lequel il s'agit de synchroniser une séquence prédéterminée, émise par un émetteur radio, avec une séquence théoriquement identique, synthétisée par le récepteur.

La solution traditionnellement adoptée dans l'art antérieur pour obtenir et maintenir cette synchronisation consiste à utiliser au moins un oscillateur commandé en tension (VCO) et deux ou trois corrélateurs.

Une telle solution présente l'inconvénient de requérir un matériel non négligeable et relativement coûteux.

Dans ce contexte, l'invention a pour but essentiel de permettre la synchronisation de deux signaux périodiques semblables, dont le second est synthétisé avec une phase ajustable, sans avoir à recourir à l'emploi d'un oscillateur commandé en tension et en n'utilisant qu'un système de corrélation.

Le brevet EP 0428444 est le document le plus pertinent de l'art antérieur et décrit un procédé de synchronisation de deux signaux périodiques de même forme et de même période théorique, le premier signal etant produit de façon itérative, dans lequel le second signal est synthétisé de façon itérative avec une phase ajustable, et dans lequel cette phase est ajustée, jusqu'à l'obtention de la synchronisation, en fonction d'une mesure de corrélation entre les premier et second signaux, le procédé comprenant l'opération suivante :
- produire une mesure de la corrélation entre les premier et second signaux, et comparer cette mesure à une valeur minimale prédéterminée et
- appliquer, au second signal, des décalages d'un demi-bit.

Une autre méthode de corrélation "tau-dither" est décrite dans le brevet EP 0385636.

Le procédé de l'invention est caractérisé en ce qu'il comprend les opérations énoncées dans la première revendication.

Le procédé de 'l'invention est particulièrement aisé à mettre en oeuvre lorsque le second signal est une séquence pseudo-aléatoire dont la fonction d'autocorrélation présente un maximum unique.

L'invention est notamment applicable au cas où le premier signal est un signal de réception radio.

D'autres caractéristiques et avantages de l'invention ressortiront de la description qui en est faite ci-après, à titre indicatif et nullement limitatif, en référence aux dessins annexés, dans lesquels :
- la figure 1 est un schéma d'un circuit mettant en oeuvre le procédé de l'invention;
- La figure 2 représente la fonction d'autocorrélation typique du second signal utilisé dans l'invention;
- La figure 3 est une machine d'états mise en oeuvre par le procédé de l'invention; et
- La figure 4 est un organigramme destiné à supporter une description complète du procédé de l'invention.

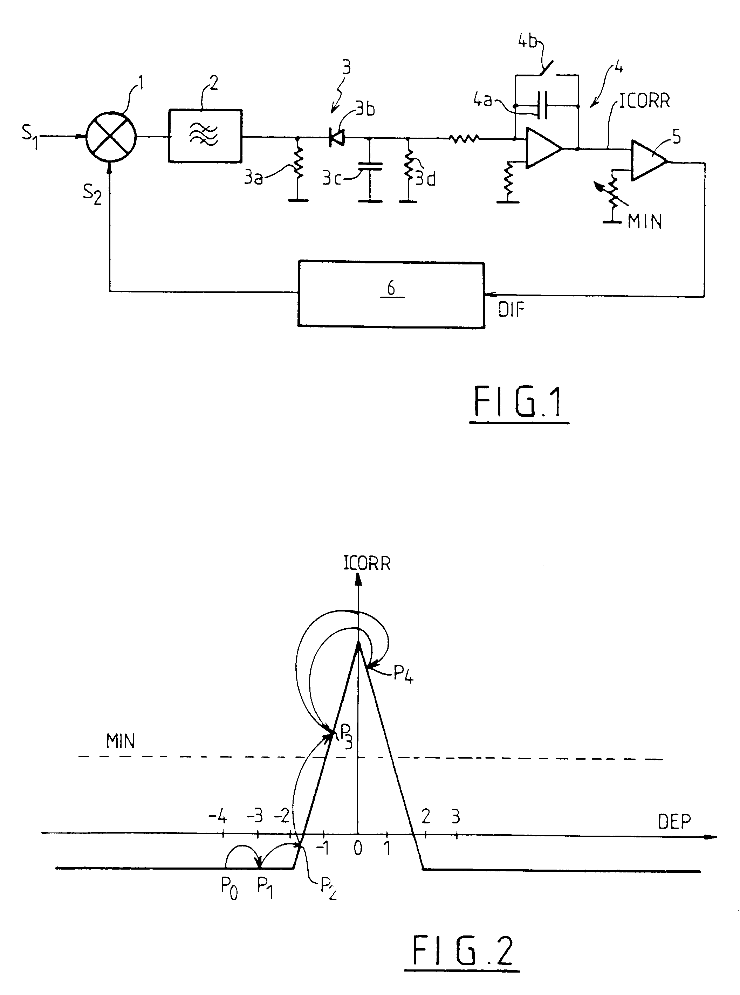

De façon plus précise, la figure 1 est une représentation partielle d'un récepteur radio, sur laquelle S1 désigne un signal prédéterminé, reçu de façon répétitive par le récepteur, et S2 un signal synthétisé par ce dernier.

Le signal S2 constitue une simple réplique du signal S1, c'est-à-dire qu'il présente, en théorie au moins, la même forme et la même période que S1, mais il est synthétisé avec une phase susceptible d'être ajustée de manière à permettre au signal S2 de se synchroniser avec le signal S1.

Par exemple, S1 est une séquence de début de message dont la phase doit être détectée, ou une séquence pseudo-aléatoire telle que celles qui sont utilisées dans les systèmes de communication à bande étalée et séquence directe (direct sequence spread spectrum).

S1 et S2 peuvent a priori comprendre un nombre quelconque de bits préférablement au moins égal à 3, et sont par exemple constitués par la séquence de 31 bits suivante:
1111100011011101010000100101100.

Les signaux S1 et S2 sont acheminés vers un multiplieur 1 qui fournit un signal représentatif de leur produit à un filtre passe-bande 2.

Le signal délivré par ce dernier parvient à un détecteur d'enveloppe 3, de type en soi connu de l'homme de l'art, et comprenant par exemple une résistance 3a, une diode 3b, une capacité 3c, et une seconde résistance 3d, les résistances et la capacité étant montées comme la figure le montre et la diode étant connectée entre la première résistance et la capacité.

Le signal de sortie du détecteur d'enveloppe 3 est accumulé dans un intégrateur 4, qui comprend une capacité 4a susceptible d'être déchargée par la fermeture contrôlée d'un interrupteur 4b.

Enfin, le signal de sortie ICORR de l'intégrateur 4 est soustrait par un comparateur 5 à un signal représentant une valeur minimale MIN, et le signal DIF représentatif de la différence ICORR-MIN est délivré à un circuit logique 6, par exemple un micro-processeur, notamment chargé de synthétiser le signal S2 et de le synchroniser avec le signal S1.

La signification physique des signaux ICORR et MIN peut être aisément comprise sur la base de l'exemple ci-après et de la figure 2.

Si le signal S1 est représenté par la séquence
1111100011011101010000100101100, et si ce signal est totalement synchronisé avec S2,
c'est-à-dire si S1 = 1111100011011101010000100101100
et S2 = 1111100011011101010000100101100,
le signal ICORR, défini comme l'intégrale sur la durée d'une période de S2 du produit S1*S2, sera maximal et égal à 16.

Si S1 et S2 présentent un décalage relatif de phase de la durée de deux demi-bits, ce qu'il sera convenu de noter ici DEP=2, autrement dit un déphasage de 360/31 degrés, les signaux S1 et S2 apparaissent alors comme
S1 = 1111100011011101010000100101100
et S2 = 1111000110111010100001001011001,
et ICORR ne vaut plus que 8.

Il est aisé de remarquer de la même façon que pour toute valeur, comprise entre 2 et 29, du déphasage DEP entre S1 et S2 exprimé en durée de demi-bit, le signal intégré de corrélation ICORR ne vaut plus que 8, et que pour toute valeur de DEP comprise entre - 2 et 2, ICORR est compris entre 8 et 16; c'est en fait ce que représente, de façon symbolique, la figure 2.

Dans ces conditions, les signaux S1 et S2 ne peuvent être considérés comme partiellement corrélés que lorsque la valeur de ICORR est strictement supérieure à 8, et par exemple égale à 12, cette valeur représentant alors la valeur minimale MIN précédemment évoquée.

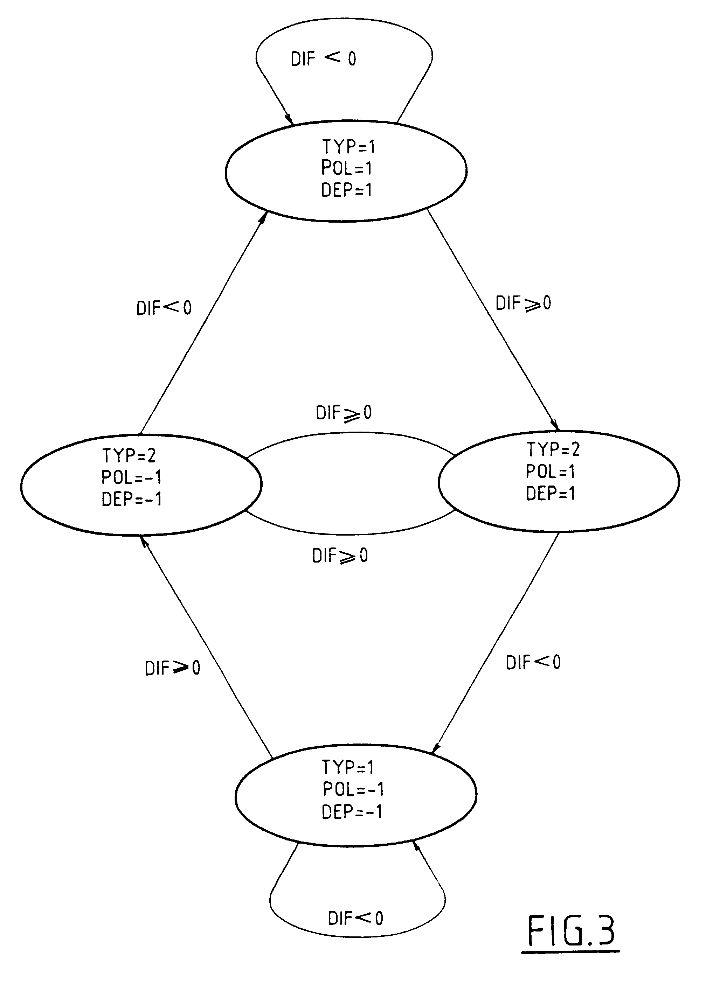

La figure 3 représente l'essentiel des opérations accomplies par le circuit 6 pour synchroniser les signaux S1 et S2.

Ce dernier, pour chaque nouvelle période du signal S2, adopte un état d'un premier type, désigné par TYP=1, ou d'un second type, désigné par TYP=2, selon que la valeur minimale MIN dépasse ou non la mesure obtenue pour la corrélation sur la dernière période écoulée ICORR, c'est-à-dire selon que DIF = ICORR - MIN est négatif ou non.

Les états de chaque type ont une polarité positive désignée par POL=1, ou négative désignée par POL=-1, et chaque état nouvellement adopté a la même polarité que l'état antérieur si ce dernier était du premier type, et une polarité inverse dans le cas contraire.

Dans ces conditions, le circuit 6 applique, au début de chaque nouvelle période du signal S2, un saut de phase élémentaire DEP de même polarité que l'état nouvellement adopté, par exemple égal à POL comme indiqué sur la figure 3.

Les effets d'un tel procédé sont faciles à percevoir sur la figure 2.

En supposant que l'état initial soit de type 1 et de polarité positive, la détection d'une valeur négative pour DIF à la fin d'une série de périodes successives du second signal conduit au maintien de l'état TYP=1 et POL=1, donc à une progression de la relation de phase entre S1 et S2 telle que la représentent les points successifs P0, P1, P2, et P3.

En P3, l'apparition d'une valeur positive de DIF provoque un saut vers l'état TYP=2 et POL=1, dans lequel le saut de phase appliqué au début de la nouvelle période de S2 garde le sens qu'il avait antérieurement.

Cette opération a pour résultat de conduire à la relation de phase représentée par le point P4, c'est-à-dire à un dépassement du pic de corrélation.

En P4, la détection d'une nouvelle valeur positive pour DIF provoque un saut dans l'état TYP=2 et POL=-1, dans lequel le saut de phase appliqué au début de la nouvelle période de S2 est cette fois inversé, permettant un retour au point P3.

Il est aisé de remarquer sur la figure 2 qu'aussi longtemps qu'une corrélation suffisante sera détectée, c'est-à-dire que DIF restera positif, la relation de phase entre S1 et S2 restera représentée par les points P3 et P4, qui se situent de part et d'autre du pic de corrélation.

Par ailleurs, si, pour quelque raison que ce soit, la relation de phase était perdue, le procédé représenté sur la figure 3 permettrait de revenir à la synchronisation des signaux S1 et S2, de la même manière que celle-ci a été obtenue la première fois.

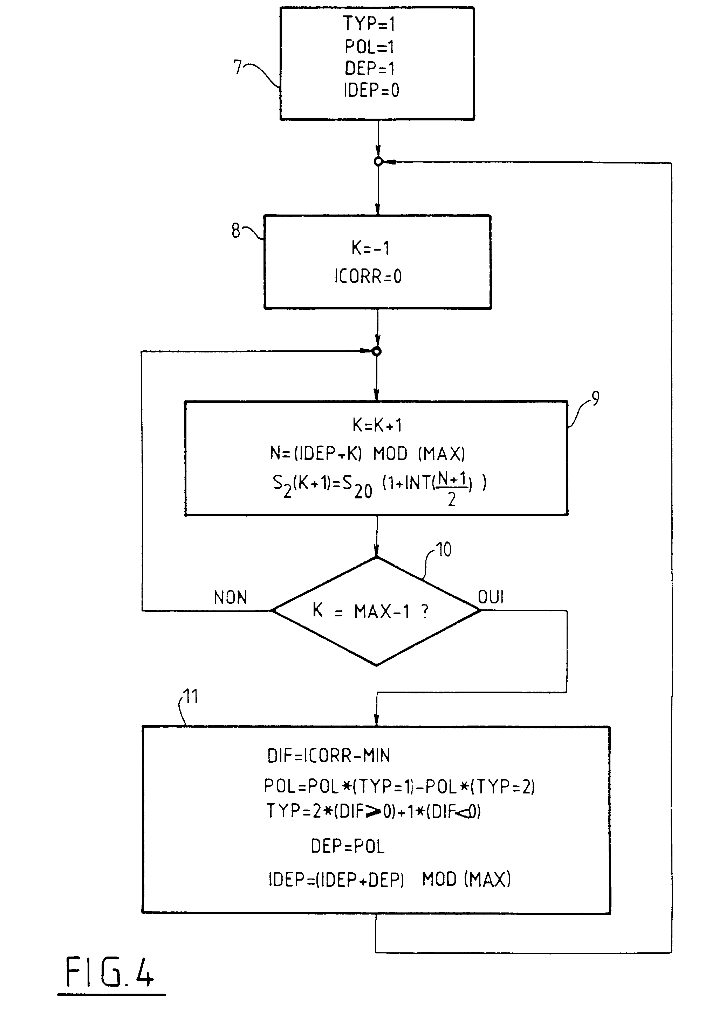

La figure 4 illustre l'ensemble des opérations accomplies par le circuit 6 pour parvenir à synchroniser les signaux S1 et S2.

Cette figure fait apparaître un certain nombre de paramètres identifiés par des noms, et dont les significations sont données ou rappelées ci-après.
TYP désigne un type d'état adopté par le circuit 6;
POL désigne la polarité de cet état;
DEP désigne un décalage de phase élémentaire entre S1 et S2;
dans l'exemple choisi, ce décalage est égal à la durée d'un demi-bit de S2;
IDEP désigne le cumul des valeurs successives de DEP;
K est un indice compteur;
S2o désigne une séquence de bits mémorisée à une adresse fixe dans le circuit 6 et qui, lue séquentiellement à partir de cette adresse, représente le signal S2 pris avec un déphasage nul;
N est une variable intermédiaire;
MOD désigne la fonction "modulo", représentée par le reste d'une division entière;
MAX désigne le nombre total d'intervalles de temps de durée DEP contenus dans S2o (égal à 62 dans l'exemple);
INT désigne le quotient d'une division entière;
S2(X) désigne la valeur à donner au second signal S2 pendant le Xième intervalle de temps de durée DEP;
S2o(Y) désigne la valeur du Yième bit de la séquence S2o;
(TYP = 1), et plus généralement (A relation B), désigne une variable logique égale à 1 si la relation "TYP = 1" (et plus généralement "A relation B") est vraie, et égale à zéro dans le cas contraire.

Avec ces notations, les opérations représentées sur la figure 4 sont les suivantes.

Les opérations du bloc 7 sont relatives à l'initialisation générale du système, tandis que les opérations du bloc 8 sont relatives à une initialisation périodique, faite pour chaque nouvelle période du signal S2. Physiquement, l'instruction "ICORR = 0" provoque la fermeture de l'interrupteur 4b, donc la remise à zéro de la charge de l'intégrateur 4.

Le bloc 9 calcule l'adresse S2o (1 + INT ((N+1)/2)) où se trouve la valeur du bit à produire pendant le (K + 1)ième intervalle de durée DEP, en fonction de la variable N qui dépend elle-même de la variable IDEP, cette dernière représentant, lorsque la synchronisation est obtenue, la valeur du déphasage entre la séquence S2o et le signal S1.

Le test 10 permet de détecter la fin de la synthèse d'une période du signal S2.

Dans le bloc 11, l'instruction "DIF = ICORR - MIN" correspond à la lecture du signal de sortie du comparateur 5.

Le calcul de la variable POL relative à la période du signal S2 qui va commencer utilise la valeur mémorisée de TYP, en vigueur pour la période du signal S2 qui s'achève.

Par ailleurs, la nouvelle valeur de TYP est calculée sur la base de la valeur lue de DIF et la nouvelle valeur de DEP est déterminée sur la base de la nouvelle valeur de POL.

## Revendications

1. Procédé permettant la synchronisation de deux signaux périodiques de même forme et de même période théorique, le premier signal étant produit de façon itérative, dans lequel le second signal est synthétisé de façon itérative avec une phase ajustable, et dans lequel cette phase est ajustée, jusqu'à l'obtention de la synchronisation, en fonction d'une mesure de corrélation entre les premier et second signaux, le procédé comprenant l'opération suivante :
- produire, sur chaque période du second signal, une mesure de la corrélation entre les premier et second signaux, et comparer cette mesure à une valeur minimale prédéterminée,
- adopter, pour chaque nouvelle période du second signal, un état d'un premier type ou d'un second type selon que la valeur minimale dépasse ou non la mesure obtenue pour la corrélation sur la dernière période écoulée, les états de chaque type ayant une polarité positive ou négative, et chaque état nouvellement adopté ayant la même polarité que l'état antérieur si ce dernier était du premier type, et une polarité inverse dans le cas contraire, et
- appliquer, au début de chaque nouvelle période du second signal, un saut de phase d'angle sensiblement inférieur à 360 degrés et de même polarité que l'état nouvellement adopté.

2. Procédé suivant la revendication 1, le second signal étant une séquence pseudo-aléatoire dont la fonction d'autocorrélation présente un maximum unique.

3. Procédé suivant la revendication 1, le premier signal étant un signal de réception radio.

## Patentansprüche

1. Verfahren, das die Synchronisation zweier periodischer Signale gleicher Form und gleicher theoretischer Periode ermöglicht, wobei das erste Signal iterativ erzeugt wird, wobei das zweite Signal iterativ mit einer einstellbarer Phase aufbereitet wird und wobei diese Phase bis zur Erlangung der Synchronisation in Abhängigkeit von einem Korrelationsmaß zwischen den ersten und zweiten Signalen eingestellt wird, wobei das Verfahren die folgende Operation enthält:
- Erzeugen eines Korrelationsmaßes zwischen den ersten und zweiten Signalen und Vergleichen dieses Maßes mit einem vorgegebenen Minimalwert in jeder Periode des zweiten Signals,
- Übernehmen eines Zustands eines ersten Typs oder eines zweiten Typs je nachdem, ob der Minimalwert das für die Korrelation in der letzten abgelaufenen Periode erhaltene Maß überschreitet oder nicht, für jede neue Periode des zweiten Signals, wobei die Zustände jedes Typs eine positive oder negative Polarität besitzen und wobei jeder neu übernommene Zustand die gleiche Polarität wie der frühere Zustand besitzt, falls dieser letztere vom ersten Typ war, und im entgegengesetzten Fall eine umgekehrte Polarität besitzt, und
- am Anfang jeder neuen Periode des zweiten Signals Ausführen eines Phasensprungs mit einem Winkel, der wesentlich kleiner als 360° ist, und mit derselben Polarität wie der neu übernommene Zustand.

2. Verfahren nach Anspruch 1, wobei das zweite Signal eine pseudozufällige Folge ist, deren Autokorrelationsfunktion ein eindeutiges Maximum aufweist.

3. Verfahren nach Anspruch 1, wobei das erste Signal ein Funkempfangssignal ist.

## Claims

1. A method enabling two periodic signals having the same waveform and the same theoretical period to be synchronized, the first signal being produced iteratively, in which the second signal is synthesized iteratively with adjustable phase, and in which said phase is adjusted until synchronization is obtained as a function of a measure of the correlation between the first and second signals, the method comprising the following operation:
for each period of the second signal, producing a measure of the correlation between the first and second signals, and comparing said measure with a predetermined minimum value;
for each new period of the second signal, adopting a state of a first type or of a second type depending on whether or not the minimum value exceeds the measure obtained for correlation over the previously elapsed period, either type of state having a polarity that is either positive or negative, and each newly-adopted state having the same polarity as the preceding state if it was of the first type and of opposite polarity, otherwise; and
to the beginning of each new period of the second signal, applying a phase skip through an angle of substantially less than 360° and of the same polarity as the polarity of the newly-adopted state.

2. A method according to claim 1. the second signal being a pseudorandom sequence whose autocorrelation function has a single maximum.

3. A method according to claim 1, the first signal being a signal received by radio.
